# EUROPÄISCHE PATENTSCHRIFT

(11) **EP 0 391 227 B1**
(45) Veröffentlichungstag und Bekanntmachung des Hinweises auf die Patenterteilung: **08.12.1993**
(21) Anmeldenummer: 90105877.6
(22) Anmeldetag: 27.03.1990
(51) Int. Cl.: G01P 15/135, G01P 21/00, H01H 35/14

(54) **Beschleunigungs- oder Verzögerungssensor**
Acceleration or deceleration sensor
Capteur d'accélération et de décélération

(30) Priorität: 06.04.1989 US 334310
(43) Veröffentlichungstag der Anmeldung: 10.10.1990
(73) Patentinhaber: HAMLIN INCORPORATED, Lake Mills, Wisconsin 53551 (US); DAIMLER-BENZ AKTIENGESELLSCHAFT, 70327 Stuttgart (DE)
(72) Erfinder: Reneau, Daniel R., Madison, WI 53714 (US); Bossenmaier, Alban, D-7046 Gäufelden 1 (DE); Petri, Volker, D-7042 Aidlingen 3 (DE); Katz, Egon, D-7270 Nagold 7 (DE); Henseler, Wolfgang, D-7400 Tübingen (DE)
(74) Vertreter: Prietsch, Reiner, Dipl.-Ing.

(56) Entgegenhaltungen:
- FR-A- 2 366 683
- US-A- 3 774 128
- US-A- 3 877 314
- US-A- 4 093 836
- US-A- 4 639 563

## Beschreibung

Die Erfindung betrifft einen Beschleunigungs- oder Verzögerungssensor mit den im Oberbegriff des Patentanspruches angegebenen Merkmalen.

Bekanntlich werden in Fahrzeugen mitunter Beschleunigungs- oder Verzögerungssensoren zur Detektierung einer Fahrzeugkollision benutzt. Der betreffende Sensor ist mit einer elektronischen Schaltung zur Betätigung von Sicherheitsvorrichtungen wie Gurtstrammern, Airbags, Systemen zur Unterbrechung der Brennstoffzufuhr, Funksendern oder dergleichen verbunden. Der Schaltkontakt des Sensors ist gewöhnlich ein Reedkontakt mit ferromagnetischen Kontaktfahnen, die schließen, wenn ein in der Nähe des Schaltkontaktes angeordneter Permanentmagnet infolge einer Fahrzeugkollision gegen die Rückstellkraft einer Feder oder eines Magneten beschleunigt wird und einen bestimmten Mindestweg zurücklegt, so daß er in eine Stellung kommt, in der sein auf die Kontaktfahnen wirkendes Magnetfeld ausreicht, um die in Öffnungsrichtung wirkende Federspannung der Kontaktfahnen zu überwinden.

Beschleunigungs- bzw. Verzögerungssensoren mit sogenannten Reedkontakten haben gewöhnlich ein Gehäuse, das einen Magneten umschließt, der zwischen einem ersten und einem zweiten Anschlag gleitend verschiebbar angeordnet ist. Derartige Sensoren sind aus den US-PS en 4 484 041 und 4 639 563 bekannt. Der magnetische Reedkontakt ist innerhalb des Sensors so angeordnet, daß er durch die Änderung des Magnetfeldes betätigt wird, die bei einer Verschiebung des Magneten zwischen dem ersten und dem zweiten Anschlag entsteht. Der Magnet ist durch eine Feder oder durch ein anderes Vorspannungsmittel oder durch einen weiteren Magneten in der von dem zweiten Anschlag wegweisenden Richtung belastet.

Ein typischer Einsatzfall dieses Sensors besteht darin, ihn so in ein Fahrzeug einzubauen, daß der zweite Anschlag nach vorne weist, um eine im vorderen Bereich des Fahrzeuges stattfindende Kollision festzustellen. Da es unzweckmäßig ist, Sicherheitsvorrichtungen unter den Notfallbedingungen einer Kollision zu betätigen, ist es notwendig, die Bewegung des Magneten und die elektrische Funktion des Reedkontaktes zu prüfen. Aus der US-PS 3 737 599 ist es bekannt, den Reedkontakt mit einer Spule zu umgeben und hierdurch ein Magnetfeld zu erzeugen, das den Reedkontakt zum Zwecke der Prüfung dessen Funktionsfähigkeit betätigt. Nicht geprüft kann hierdurch indessen werden, ob der Magnet seine Funktion erfüllen, also die notwendige Bewegung entgegen den Vorspannmitteln ausführen kann. Diese Funktionsprüfung wird daher durch eine Stichprobenprüfung von Sensoren unter den Bedingungen einer echten Kollision durchgeführt, ein Verfahren, das zwangsläufig ungeeignet zur Prüfung und insbesondere zur wiederholbaren Prüfung jedes einzelnen Sensors ist.

Aus der FR-A-2 366 683 ist ein Beschleunigungs- oder Verzögerungssensor mit einem magnetfeldempfindlichen Reedkontakt bekannt, der von einem relativ zu dem Reedkontakt verschiebbaren ringförmigen Permanentmagneten konzentrisch umschlossen ist. Der Permanentmagnet, der in seiner Ruhelage gegen einen Anschlag anliegt, ist durch eine Schraubenfeder in einer zur Richtung der zu detektierenden Beschleunigung oder Verzögerung entgegengerichteten Richtung belastet. Eine Möglichkeit zur wiederholbaren Funktionsüberprüfung des Sensors ist nicht vorgesehen.

Die US-A-3 877 314 offenbart einen aus einem in der Ruhelage an einem Weicheisenkern haftenden, beweglichen Permanentmagneten und einem in Abhängigkeit von der Bewegung des Magneten sättigbaren Ringkern bestehenden Beschleunigungssensor, bei dem eine um den Weicheisenkern gewickelte Spule die bei einer Kollision auf den Magneten einwirkende Kraft simuliert und somit eine wiederholbare Funktionsüberprüfung des Beschleunigungssensors gestattet. Der Weicheisenkern der Spule hat auch ohne Stromfluß immer eine Restmagnetisierung, die bei dieser Sensorbauform jedoch in Kauf genommen werden kann.

Der Erfindung liegt daher die Aufgabe zugrunde, einen beliebig wiederholbar vollständig funktionsüberprüfbaren Beschleunigungs- bzw. Verzögerungssensor zu schaffen.

Die Lösung dieser Aufgabe ist im Patentanspruch angegeben.

Gegenstand der Erfindung ist mithin ein mittels einer elektromagnetischen Spule aus nichtmagnetischem Material überprüfbarer Beschleunigungs- bzw. Verzögerungssensor, wobei die Spule angrenzend außerhalb des von einer Kapsel umschlossenen Sensors angeordnet ist und (im stromdurchflossenen Zustand) ein den verschiebbaren Magneten verschiebendes Magnetfeld erzeugt. Dieses Magnetfeld beschleunigt den Magneten in Richtung des zweiten Anschlages in ähnlicher Weise wie die durch eine Fahrzeugkollision verursachte Beschleunigung. Mithin wird der Reedkontakt ähnlich wie im Fall einer aus einer Fahrzeugkollision resultierenden, raschen Verzögerung durch die Änderung des Magnetfeldes betätigt, die der Magnet auf den Reedkontakt ausübt, während er von dem ersten Anschlag zu dem zweiten Anschlag und wieder zurückläuft. Das von der elektromagnetischen Spule erzeugte Magnetfeld kann durch geeigneten Verlauf des die Spule durchfließenden Stromstoßes (oder Stromimpulses) so ausgebildet werden, daß es die Beschleunigung bei einem Fahrzeugaufprall nachbildet. Währenddessen wird das Arbeiten des Reedkontaktes überwacht. Die elektromagnetische Spule ist so angeordnet, daß die Reedkontaktempfindlichkeit durch das Feld der Spule im wesentlichen unbeeinflußt bleibt, so daß eine vollständige Prüfung der Trägheitsreaktion auf eine gegen die rücktreibende Kraft wirkende Beschleunigungskraft erfolgt, die den Reedkontakt in gleicher Weise betätigt, als ob die Beschleunigung durch eine Fahrzeugkollision verursacht wäre.

Der im Rahmen der Erfindung vorgeschlagene überprüfbare Sensor kann einer Funktionskontrolle nach der Herstellung des Sensors unterzogen werden. Des weiteren erlaubt der vorgeschlagene Sensor dem Lenker des Fahrzeuges, in dem der Sensor angebracht ist, diesen durch Betätigung eines Schalters periodisch zu prüfen. Alternativ hierzu kann die Prüfung sebsttätig erfolgen, z.B. nach dem Einschalten der Zündung oder nach dem Anlassen des Motors. Ein fehlerhaftes Arbeiten des Sensors kann dann durch ein Warnlicht signalisiert werden.

Die Vorteile des Vorschlages nach der Erfindung bestehen mithin darin, daß sowohl die Bewegung des Magneten als auch die elektrische Funktion des Reedkontaktes geprüft werden. Die Prüfung ist wiederholbar und erfordert keine tatsächliche Fahrzeugkollision.

Die Zeichnung zeigt Ausführungsbeispiele der Erfindung in schematischer Vereinfachung. Es sind
- Figur 1: eine linksseitige Stirnansicht eines Sensors einschließlich Prüfvorrichtung,
- Figur 2: ein Längsschnitt durch den Sensor und die Prüfvorrichtung längs der Linie II-II in Figur 1,
- Figur 3: eine rechtsseitige Stirnansicht des Sensors mit Prüfvorrichtung,
- Figur 4: ein Längsschnitt durch eine zweite Ausführungsform eines Sensors mit Prüfvorrichtung.

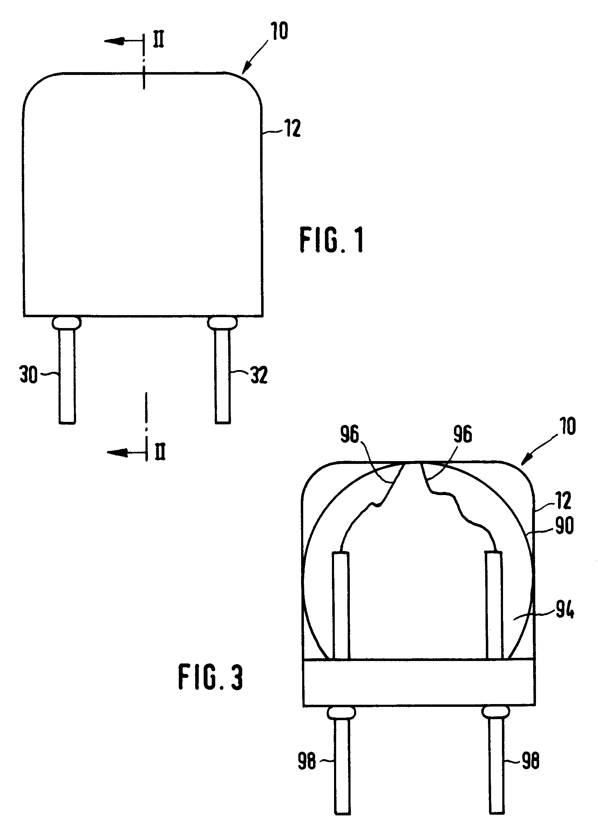

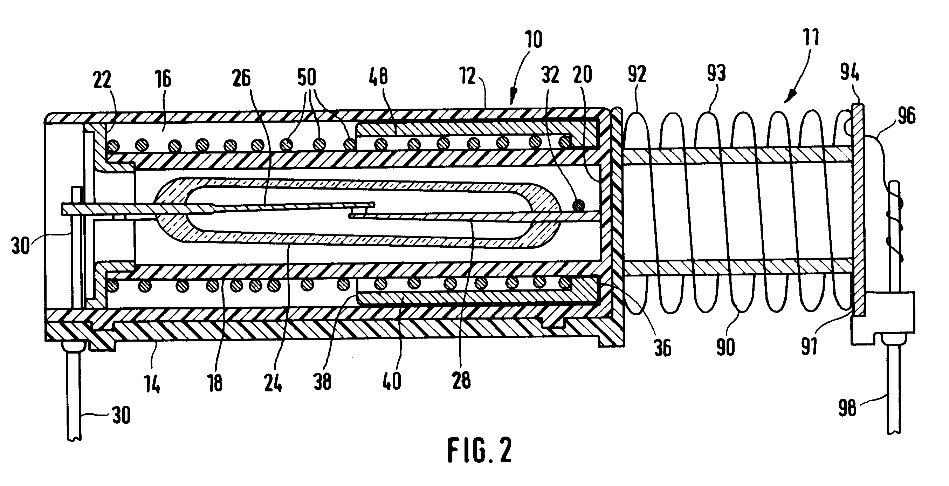

Der in den Figuren 1 bis 3 dargestellte Beschleunigungs- bzw. Verzögerungssensor 10 umfaßt eine Prüfvorrichtung 11 nach dem vorliegenden Vorschlag. Der Sensor 10 steht stellvertretend für alle Bauformen, die mit einem magnetischen Reedkontakt arbeiten, der schaltet, wenn der Sensor Beschleunigungskräften nennenswerter Größe ausgesetzt ist. Der Sensor 10 umfaßt normalerweise eine Kapsel 12, deren Gehäuse 14 einen Raum 16 begrenzt, welcher einen waagrecht angeordneten Reedkontaktbehälter in der bevorzugten Form eines Röhrchens 18 umschließt. Das Gehäuse 14 weist innenseitig einen ersten Anschlag 20 und einen zweiten Anschlag 22 auf. Das Röhrchen 18 erstreckt sich zwischen den Anschlägen 20 und 22. Innerhalb des Röhrchens 18 ist ein Reedkontakt 24 mit Kontaktfahnen 26 und 28 angeordnet, die sich normalerweise in der Offenstellung befinden. Die Kontaktfahnen 26 bzw. 28 sind mit Schalteranschlüssen 30 bzw. 32 elektrisch verbunden. Auf dem Röhrchen 18 ist ein rohrförmiger Magnet 40 mit einer Stirnfläche 36 und einer zweiten Stirnfläche 38 verschiebbar angeordnet. Der Magnet 40 ist in dem Raum 16 so angeordnet, daß die erste Stirnfläche dem ersten Anschlag 20 und die zweite Stirnfläche dem zweiten Anschlag 22 zugewandt sind. Der Magnet 40 hat horizontal ausgerichtete Nord- und Südpole, die den Anschlägen 20 und 22 zugewandt sind. Der Magnet 40 hat eine Ausnehmung 48 zur Aufnahme einer Feder 50, die um das Röhrchen 18 herum und innerhalb der Ausnehmung 48 angeordnet ist. Die Feder 50 belastet den Magneten 40 in der von dem zweiten Anschlag 22 wegweisenden Richtung.

Die Prüfvorrichtung 11 umfast eine elektromagnetische Spule 90, die außerhalb der Kapsel 12 angrenzend an den ersten Anschlag 20 an dem Gehäuse 14 angeordnet ist. Die Spule 90 umfaßt einen Spulenkörper 91 und eine Wicklung 93, deren Windungen auf den Spulenkörper 91 aufgewickelt sind. Die Spule 90 besteht aus nichtmagnetischem Material, z.B. Kupfer, so daß die Spule 90 im stromlosen Zustand die Funktion des Sensors 10 nicht beeinträchtigt. Die Spule 90 ist so angebracht, daß ihre erste Stirnfläche 92 sich außerhalb des Gehäuses 14 benachbart zu dem ersten Anschlag 20 und ihre zweite Stirnfläche 94 gegenüber der ersten Stirnfläche 92 befinden. Mittels der elektromagnetischen Spule 90 kann ein Magnetfeld erzeugt werden, dessen auf der Achse der Spule liegende Pole so orientiert sind, daß auf den Magneten 40 eine abstoßende Kraft ausgeübt wird, wenn an die Spulenanschlüsse 98, die ihrerseits mit den Wicklungsenden 96 verbunden sind, Spannung angelegt wird. Der dann die Spule durchfließende Strom erzeugt ein Magnetfeld, das gegensinnig zu dem des Magneten 40 orientiert ist. Wenn beispielsweise der Magnet 40 so orientiert ist, daß der Südpol in Richtung des ersten Anschlages 20 und der Nordpol in Richtung des zweiten Anschlages 22 weist, muß die Stromflußrichtung in der Spule 90 so sein, daß der Südpol des Magnetfeldes an der ersten Stirnfläche 92 der Spule und der Nordpol des Magnetfeldes an der zweiten Stirnfläche 94 entstehen. Bei umgekehrter Orientierung der Pole des Magneten 40 ist eine Umkehrung der Stromflußrichtung in der Spule 90 erforderlich, um die angestrebte, den Magneten 40 abstoßende Kraft zu erzeugen. Wesentlich ist, daß sich die Spule 90 an einem Ort minimaler Reedkontaktempfindlichkeit befindet, so daß eine Erregung der Spule 90 die Kontaktfahnen 26 und 28 des Reedkontaktes 24 nicht beeinflußt.

Der Sensor 10 wird zur Feststellung einer Verzögerungskraft benutzt, die auf das Gehäuse 14 in einer Richtung wirkt, die im wesentlichen von dem zweiten Anschlag 22 zu dem ersten Anschlag 20 verläuft. Im Falle einer Kollision wären das Gehäuse 14 des Sensors 10 und das Fahrzeug, in dem der Sensor 10 angeordnet ist, einer raschen Verzögerung in der beschriebenen Richtung ausgesetzt. Bei einer solchen Verzögerung würde der Magnet 40 relativ zu dem Gehäuse 14 in der Richtung von dem ersten Anschlag 20 zu dem zweiten Anschlag 22 beschleunigt werden. Der Magnet 40 ist von dem zweiten Anschlag 22 wegweisend durch die Feder 50 gegen den ersten Anschlag 20 belastet. Im Kollisionsfall überwindet die Beschleunigungskraft des Magneten 40 die Vorspannung der Feder 50, und der Magnet 40 bewegt sich zwangsweise in Richtung des zweiten Anschlages 22. Die Federkonstante der Feder 50 ist so gewählt, daß die Vorspannung durch eine Beschleunigungskraft vorgegebener Größe überwunden wird. Bewegt sich der Magnet 40 in der angegebenen Richtung, so führt sein Magnetfeld dazu, daß sich die normalerweise offenen Kontaktfahnen 26 und 28 des Reedkontaktes 24 schließen. Der exakte Schaltpunkt des Reedkontaktes 24 hängt von der Stärke des Magneten 40 und der Empfindlichkeit der Kontaktfahnen des Reedkontaktes 24 ab.

Um die Funktion sowohl der Bewegung des Magneten 40 als auch der elektrischen Kontaktgabe des Reedkontaktes 24 zu prüfen, wird auf den Magneten 40 eine abstoßende elektromagnetische Kraft ausgeübt, die den Magneten 40 in Richtung auf den zweiten Anschlag 22 sich bewegen läßt. Um dies zu bewerkstelligen, wird eine Gleichspannung über die Anschlüsse 98 an die Spule 90 angelegt, um einen Stromfluß zu erzeugen. Der Magnet 40 wird dann beschleunigt und überwindet die Vorspannung der Feder 50. Genauso wie im Fall einer Fahrzeugkollision führt die Verschiebung des Magneten 40 über den Kontaktfahnen 26 und 28 des Reedkontaktes 24 dazu, daß dieser schließt. Der Magnet 40 bewegt sich hierbei weiter längs des Röhrchens 18 in Richtung auf den zweiten Anschlag 22. Sobald die Prüfspannung nicht mehr an der Spule 90 anliegt, führt die Feder 50 den Magneten 40 zurück zu dem ersten Anschlag 20.

Die Beschleunigung des Magneten 40 durch eine elektromagnetische Kraft bildet somit die durch eine Fahrzeugkollision verursachte Beschleunigung nach. Da die Stärke des elektromagnetisch erzeugten Feldes u.a. vom Spulenstrom abhängt, können die Auswirkungen unterschiedlicher Beschleunigungskräfte auf den Magneten 40 und die anderen Teile des Sensors 10 durch Erzeugung unterschiedlicher elektromagnetischer Kräfte mittels der Spule 90 untersucht und beobachtet werden. Geeignete Auslegung vorausgesetzt, kann das elektromagnetisch erzeugte Feld den Magneten 40 um jede gewünschte Strecke verschieben. Die Prüfvorrichtung 11 kann zur werksseitigen Prüfung des Sensors 10 verwendet oder mit dem Sensor als ein Bestandteil desselben vereinigt werden. Im letzteren Fall kann die Prüfung dann durch den Fahrer oder Benutzer des Fahrzeuges erfolgen. Die Prüfvorrichtung 11 kann so eingebaut werden, daß der Fahrer oder Benutzer den Sensor 10 durch Betätigen eines geeigneten Schalters periodisch prüfen kann. Stattdessen kann die Prüfvorrichtung 11 so geschaltet werden, daß die Prüfung selbsttätig erfolgt, beispielsweise beim Einschalten der Zündung oder beim Anlassen des Motors. Bei Feststellung einer fehlerhaften Arbeitsweise des Sensors 10 würde zweckmäßigerweise eine Warnleuchte im Blickfeld des Fahrers aufleuchten.

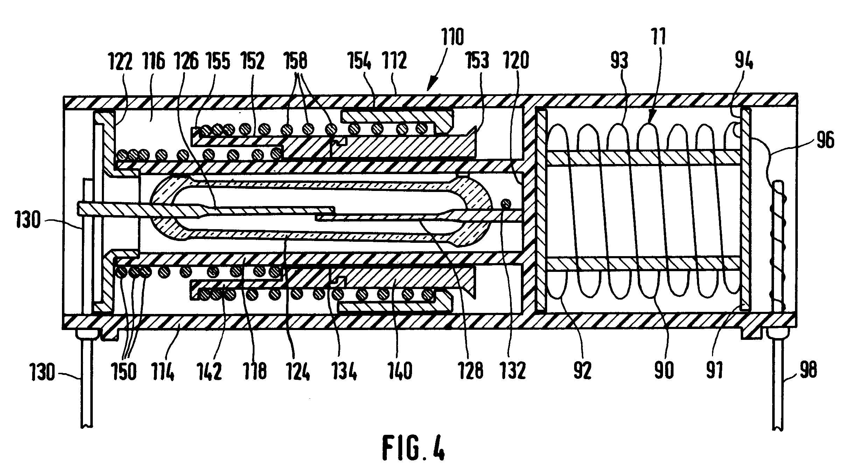

Die Prüfvorrichtung 11 ist auch in Verbindung mit anderen Bauformen von Sensoren mit magnetischen Reedkontakt verwendbar. Beispielsweise zeigt die Figur 4 einen Sensor 110 mit einer Kapsel 112, einem Gehäuse 114, einem Innenraum 116, einem Röhrchen 118, einem ersten Anschlag 120, einem zweiten Anschlag 122, einem Reedkontakt 124 mit Kontaktfahnen 126 und 128 sowie Schalteranschlüssen 130 und 132. Alle diese Teile entsprechen den funktionsmäßig gleichen Teilen des Sensors nach den Figuren 1 - 3. Der Magnet 140 bildet einen Teil eines Schlittens 134, der zwischen dem ersten Anschlag 120 und dem zweiten Anschlag 122 verschiebbar ist. Der Schlitten umfaßt eine nichtmagnetische Hülse 142 und den Magneten 140. Eine erste Feder 150 ist zwischen dem zweiten Anschlag 122 und dem Schlitten 134 so angeordnet, daß auf der äußeren, zylindrischen Mantelfläche 152 des Schlittens 134 eine nichtmagnetische Masse 154 zwischen einem ersten vorspringenden Stirnrand 153 und einem zweiten vorspringenden Stirnrand 155 verschiebbar ist. Der erste vorspringende Rand 153 befindet sich gegenüber dem ersten Anschlag 120, und der zweite vorspringende Rand 155 ist an der gegenüberliegenden Stirnseite des Schlittens vorgesehen. Die nichtmagnetische Masse 154 verschiebt sich auf der äußeren Mantelfläche 152 des Schlittens parallel zur Verschiebungsrichtung des Schlittens 134 auf dem Röhrchen 118. Eine zweite Feder 158 sitzt zwischen dem zweiten vorspringenden Rand 155 und der nichtmagnetischen Masse 154. Wenn der Schlitten 134 eine Beschleunigung erfährt, arbeitet der Sensor 110 in zwei Stufen. In der ersten Stufe verschiebt sich der Schlitten 134 von einer Ruhestellung an dem ersten Anschlag 120 in Richtung auf den zweiten Anschlag, und in der zweiten Stufe verschiebt sich die nichtmagnetische Masse 154 in Richtung auf den zweiten vorspringenden Rand 155. Mit dem Verschwinden der Beschleunigungskraft kehren diese Teile des Sensors 110 in umgekehrter Reihenfolge in ihre Ruhestellung zurück. Die elektromagnetische Spule 90 erfüllt die gleiche Funktion wie in der zuvor beschriebenen Ausführungsform insofern, als ein entgegengerichtetes Magnetfeld die Beschleunigung des Schlittens 134 bewirkt. Der elektromagnetisch ausgelöste Beschleunigungsimpuls führt auch zur Überprüfung des Verhaltens einer nachgeordneten mechanischen Stufe, beispielsweise der Verschiebung der nichtmagnetischen Masse 154 von dem ersten vorspringenden Rand 153 in Richtung auf den zweiten vorspringenden Rand. Grundsätzlich können beliebige, auf Trägheits- oder Beschleunigungskräfte ansprechende und mit dem Magneten 40 verbundene Mechaniken aktiviert und hinsichtlich ihrer Auswirkung auf den Reedkontakt beurteilt werden.

Die in der Zeichnung dargestellten Sensoren stehen lediglich stellvertretend für solche Sensoren, die mit magnetischen Reedkontakten arbeiten, welche bei Beschleunigung oder Verzögerung ansprechen bzw. schalten. Die vorgeschlagene Prüfvorrichtung 11 ist mithin auch für andere Sensoren dieser Gattung als die hier dargestellten Ausführungsformen verwendbar. Weiterhin kann bei der Prüfvorrichtung 11, z.B. die elektromagnetische Spule 90 außerhalb des Gehäuses 14,114 angrenzend an den zweiten Anschlag 22,122 angeordnet werden. Die Pole des Magneten 40,140 und der Spule 90 können dann so zueinander orientiert sein, daß eine Anziehungskraft entsteht.

## Patentansprüche

1. Beschleunigungs- oder Verzögerungssensor (10,110), mit einem magnetfeldempfindlichen Reedkontakt (24,124), den ein eine träge Masse bildender, in einer Kapsel (12,112) angeordneter und relativ zu dem Reedkontakt (24,124) verschiebbarer, ringförmiger Permanentmagnet (40,140) konzentrisch umschließt, der durch eine mittels einer vorgespannten, sich mit ihrem einen Ende gegen den Permanentmagneten (40,140) abstützenden Schraubendruckfeder (50,150) erzeugte Rückstellkraft in einer Richtung belastet ist, die der Richtung der zu detektierenden Beschleunigung oder Verzögerung entgegengerichtet ist, wobei der Permanentmagnet (40,140) in seiner Ruhelage gegen einen Anschlag (20,120) der Kapsel (12,112) anliegt,
**dadurch gekennzeichnet,**
daß eine elektrische Spule (90) aus nichtmagnetischem Material gleichachsig zu der Verschiebungsrichtung des Permanentmagneten (40,140) orientiert und mit ihrer einen Stirnseite an den die Ruhelage des Permanentmagneten (40,140) bestimmenden Anschlag (20,120) angrenzend außerhalb der Kapsel (12,112) des Sensors (10,110) und zur Überprüfung der Bewegung des Permanentmagneten (40,140) und der elektrischen Funktion des Reedkontaktes (24,124) so angeordnet und gewickelt ist,
daß das nach Anlegen einer Gleichspannung von ihr im stromdurchflossenen Zustand erzeugte Magnetfeld auf den Permanentmagneten (40,140) zumindest annähernd die gleiche Kraft wie die zu detektierende Beschleunigung oder Verzögerung ausübt, hingegen die Kontaktfahnen (26,28,126,128) des Reedkontaktes (24,124) nicht beeinflußt.

## Claims

1. Acceleration or deceleration sensor (10, 110) with a magnetic field sensitive reed contact (24, 124) surrounded concentrically by an annular permanent magnet (40, 140) which forms an inert body, is arranged in a capsule (12, 112) and is displaceable with respect to the reed contact (24, 124), said permanent magnet being loaded, by means of the restoring force produced by a preloaded helical compression spring (50, 150), one end of which is to be braced against the permanent magnet (40, 140), in a direction which is opposite to the direction of the acceleration or deceleration to be detected, whereby the permanent magnet (40, 140) in its rest position lies against a stop (20, 120) of the capsule (12, 112), characterised in that
an electrical coil (90) of non-magnetic material is oriented coaxially to the direction of displacement of the permanent magnet (40, 140), one of the coil ends thereof being adjacent to the stop (12, 112) which determines the rest position of the permanent magnet (40, 140) and on the exterior of the capsule (12, 112) of the sensor and is so arranged and wound to monitor the movement of the permanent magnet (40, 140) and the electrical function of the reed contact (24, 124),
in that after the application of a direct voltage, the magnetic field produced therefrom in the permanent magnet (40, 140) in the current-carrying state is at least approximately of the same strength as that exerted by the acceleration or deceleration to be detected, but does not affect the contacts tabs (26, 28, 126, 128) of the reed contact (24, 124).

## Revendications

1. Capteur d'accélération ou de décélération (10,110), équipé d'un contact reed (24,124) sensible au champ magnétique entouré de façon concentrique par un aimant permanent (40,140) de forme annulaire qui constitue une masse inerte, qui est disposé dans une capsule (12,112), qui peut coulisser par rapport au contact reed (24,124), et qui est soumis à une force de rappel engendrée par un ressort de pression hélicoïdal (50,150), précontraint, s'appuyant par l'une de ses extrémités contre l'aimant permanent (40,140), dans un sens qui est opposé au sens de l'accélération ou de la décélération à détecter, l'aimant permanent (40,140) étant accolé dans sa position de repos contre une butée (20,120) de la capsule (12,112), caractérisé en ce qu' une bobine électrique (90) en matériau non magnétique est orientée coaxialement au sens de déplacement de l'aimant permanent (40,140), a une face frontale contiguë à la butée (20,120) qui détermine la position de repos de l'aimant permanent (40,140), est disposée à l'extérieur de la capsule (12,112) du capteur (10,110) et est enroulée, pour contrôler le mouvement de l'aimant permanent (40,140) et la fonction électrique du contact reed (24,124), de telle façon que le champ magnétique engendré par elle, lorsqu'elle est traversée par le courant, après application d'une tension continue, exerce sur l'aimant permanent (40,140) une force au moins à peu près égale à l'accélération ou la décélération à détecter, mais n'influe pas en revanche sur les lamelles de contact (26,28,126,128) du contact reed (24,124).
